# EUROPEAN PATENT APPLICATION

(11) **EP 4 807 595 A1**
(43) Date of publication of application: **16.09.2026**
(21) Application number: 26192509.3
(22) Date of filing: 16.07.2026
(51) Int. Cl.: G06F 21/53, G06F 9/46, G06F 21/62, G06F 9/50, G06F 9/455

(54) **HARDWARE ACCESS CONTROL METHOD AND ELECTRONIC DEVICE**

(30) Priority: 25.06.2026 SG 10202602185V
(71) Applicant: XG TECH PTE. LTD., Singapore 179098 (SG)
(72) Inventor: LIN, Tao, 179098 Singapore (SG); ZHOU, Mingjun, 179098 Singapore (SG)
(74) Representative: Kohler Schmid Möbus Patentanwälte

(57) **Abstract**

The present disclosure relates to the field of vehicle technologies, and provides a hardware access control method and an electronic device. The method includes: receiving at least one hardware access request sent by at least one target operating system on a same chip, where the hardware access request is used to request a target pin that the target operating system needs to access; obtaining a pre-configured access control rule, where the access control rule is used to determine access permission of a plurality of operating systems on the same chip for a plurality of pins; and determining, according to the access control rule, the access permission of the target operating system corresponding to the hardware access request for the target pin. This implements pin-level fine-grained hardware isolation and reduces chip design and manufacturing costs.

## Description

### FIELD OF THE INVENTION

The present disclosure relates to the field of vehicle technologies, and in particular, to a hardware access control method and an electronic device.

### BACKGROUND OF THE INVENTION

In a cockpit-driving integrated system on chip (SoC), a plurality of independent operating systems run on a same chip. Security of hardware access and refined isolation for the chip are fundamental to stable and reliable operation of the plurality of operating systems. Pins serve as core physical interfaces through which the operating systems interact with external hardware, and precise management and control for access permission for the pins are key to meeting security requirements.

### SUMMARY OF THE INVENTION

To resolve the foregoing technical problem, the present disclosure provides a hardware access control method and an electronic device, which achieve pin-level fine-grained hardware isolation and reduce chip design and manufacturing costs.

According to a first aspect of the present disclosure, a hardware access control method is provided, including:
receiving at least one hardware access request sent by at least one target operating system on a same chip, wherein the hardware access request is used to request a target pin that the target operating system needs to access;
obtaining a preset access control rule, where the access control rule is used to determine access permission of a plurality of operating systems on the same chip for a plurality of pins; and
determining, according to the access control rule, the access permission of the target operating system corresponding to the hardware access request for the target pin.

According to a second aspect of the present disclosure, a hardware access control apparatus is provided, including:
a request receiving module, configured to receive at least one hardware access request sent by at least one target operating system on a same chip, where the hardware access request is used to request a target pin that the target operating system needs to access;
a rule obtaining module, configured to obtain a preset access control rule, where the access control rule is used to determine access permission of a plurality of operating systems on the same chip for a plurality of pins; and
a permission determining module, configured to determine, according to the access control rule, access permission of the target operating system corresponding to the hardware access request for the target pin.

According to a third aspect of the present disclosure, a computer readable storage medium is provided. The storage medium stores a computer program, and the computer program is used to implement the hardware access control method provided in embodiments in the first aspect of the present disclosure.

According to a fourth aspect of the present disclosure, an electronic device is provided. The electronic device includes: a processor; and a memory for storing instructions executable by the processor, wherein the processor is configured to read the executable instructions from the memory, and execute the executable instructions to implement the hardware access control method provided in the embodiments in the first aspect of the present disclosure.

According to the technical solutions of the embodiments of the present disclosure, secure and orderly access of a plurality of operating systems on a same chip to pin resources is achieved. The solutions do not require modification of a chip hardware design. Through rule setting and request management and control at a software level, including obtaining at least one hardware access request sent by at least one target operating system on the same chip, and determining, according to the preset access control rule, the access permission of the target operating system corresponding to the hardware access request for the target pin, pin-level fine-grained hardware isolation is achieved, and chip design and manufacturing costs are reduced. Meanwhile, through unified management and control for hardware access of a plurality of operating systems, problems such as accidental access and unauthorized operations between the operating systems are effectively avoided, thereby significantly improving operational security and stability of the plurality of operating systems.

### BRIEF DESCRIPTION OF THE DRAWINGS

FIG. 1 is a block diagram of a structure of a hardware access control system according to an exemplary embodiment of the present disclosure;
FIG. 2 is a schematic flowchart of a hardware access control method according to an exemplary embodiment of the present disclosure;
FIG. 3 is a schematic flowchart of another hardware access control method according to an exemplary embodiment of the present disclosure;
FIG. 4 is a schematic flowchart of still another hardware access control method according to an exemplary embodiment of the present disclosure;
FIG. 5 is a schematic flowchart of yet another hardware access control method according to an exemplary embodiment of the present disclosure;
FIG. 6 is a schematic flowchart of still yet another hardware access control method according to an exemplary embodiment of the present disclosure;
FIG. 7 is a schematic flowchart of a method for obtaining an access control rule according to an exemplary embodiment of the present disclosure;
FIG. 8 is a schematic flowchart of another method for obtaining an access control rule according to an exemplary embodiment of the present disclosure;
FIG. 9 is a flowchart of a further hardware access control method according to an exemplary embodiment of the present disclosure;
FIG. 10 is a flowchart of a still further hardware access control method according to an exemplary embodiment of the present disclosure;
FIG. 11 is a schematic diagram of a structure of a hardware access control apparatus according to an exemplary embodiment of the present disclosure; and
FIG. 12 is a diagram of a structure of an electronic device according to an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are only some, not all, of embodiments of the present disclosure. It should be understood that the present disclosure is not limited by the exemplary embodiments.

It should be noted that unless otherwise specifically stated, the relative arrangements, numerical expressions, and numerical values of components and steps set forth in these embodiments do not limit the scope of the present disclosure.

### Application overview

In a cockpit-driving integrated system on chip, parallel operation of a plurality of operating systems has become a mainstream architecture. Pins serve as core physical interfaces through which the operating systems interact with external hardware, and fine granularity and precise management and control for access permission for the pins are crucial to operational security and stability of a plurality of in-vehicle systems. For example, in a scenario where an in-vehicle infotainment (IVI) system, an advanced driver assistance system (ADAS), and a cluster system share same chip hardware resources, hardware access isolation may be used to avoid accidental access and conflicts in pin operations between the plurality of operating systems, thereby meeting stringent functional safety requirements of an in-vehicle scenario.

In related technologies, a hardware firewall is used to achieve hardware resource isolation of a plurality of operating systems. The hardware firewall can divide an address space into a plurality of segments and set different read/write permission of different bus masters for each segment, thereby achieving isolation protection for the address space. However, limited by factors such as chip area and costs, the hardware firewall typically only supports address space division with a minimum unit of 4 KB, and a quantity of divided segments is limited, being generally up to 64 segments. This means that the hardware firewall can achieve isolation of at most 64 address segments of 4 KB at a finest granularity. However, a pin controller and a GPIO controller can control hundreds of pins, where each pin typically corresponds to a 32-bit register, with these registers arranged contiguously in the address space. Therefore, it is difficult to align register addresses of all the pins according to a 4-KB boundary. Even if alignment can be achieved, the hardware firewall can only isolate at most 64 groups of pins, cannot cover all resources. In addition, if only a single pin needs to be controlled, a 4-KB address space still needs to be allocated, causing severe wastes of address resources.

If a chip hardware design is modified and redundant designs hardware isolation modules are added to achieve pin-level fine-grained isolation, difficulty of chip design increases, manufacturing costs are high, and development and adaptation cycles are significantly extended. In this case, it is difficult to balance both security and cost-effectiveness of hardware isolation of a plurality of operating systems on an in-vehicle chip, and it cannot adapt to actual requirements of fine-grained access management and control for hardware resources by the plurality of operating systems under a cockpit-driving integrated architecture.

To resolve the foregoing technical problems, the embodiments of the present disclosure provide a hardware access control method and an electronic device. A core of the method is: receiving at least one hardware access request sent by at least one target operating system on a same chip, where the hardware access request carries a target pin that the target operating system needs to access; obtaining a preset access control rule, where the access control rule is used to determine access permission of a plurality of operating systems on the same chip for a plurality of pins; and determining, according to the access control rule, the access permission of the target operating system corresponding to the hardware access request for the target pin. According to this solution, the at least one hardware access request sent by the at least one target operating system on the same chip is received, and the access permission of the target operating system corresponding to the hardware access request for the target pin is determined according to the preset access control rule, so that pin-level fine-grained hardware isolation is implemented and chip design and manufacturing costs are reduced. Meanwhile, through unified management and control for hardware access of a plurality of operating systems, problems such as accidental access and unauthorized operations between the operating systems are effectively avoided, thereby significantly improving operational security and stability of the plurality of operating systems.

### Exemplary system

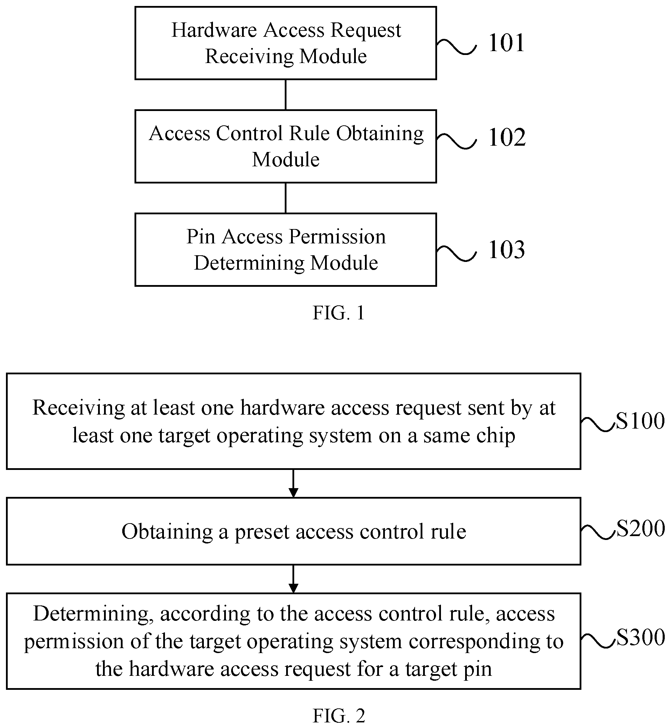

FIG. 1 is a block diagram of a structure of a hardware access control system according to an exemplary embodiment of the present disclosure.

As shown in FIG. 1, in an exemplary embodiment, the hardware access control system according to this embodiment of the present disclosure is deployed on a same chip, adapted to an application scenario of running a plurality of operating systems on the same chip. The hardware access control system includes a hardware access request receiving module 101, an access control rule obtaining module 102, and a pin access permission determining module 103. These modules cooperate with each other to implement management and control of access permission for pins.

In an implementation, the hardware access request receiving module 101 is configured to receive a hardware access request sent by at least one target operating system on the same chip, where the hardware access request is used to request a target pin that the target operating system needs to access. The target operating system is an operating system running on the same system on chip. The target pin may be a physical pin through which the chip implements hardware interaction with outside, and is a core physical interface through which the operating system accesses external hardware. This module supports simultaneously receiving one or more hardware access requests initiated by a single target operating system, may also receive one or more hardware access requests respectively sent by a plurality of target operating systems, and can be adapted to hardware access requirements of parallel operation of the plurality of operating systems.

In an implementation, the access control rule obtaining module 102 is configured to obtain a preset access control rule for determining access permission of the plurality of operating systems on the same chip for a plurality of pins. The rule may be preset based on a chip hardware resource allocation scheme and functional safety requirements of various scenarios, and may cover all operating systems and all pins on the same chip, being a core basis for determining pin access permission of the operating systems. This module may directly retrieve the pre-stored access control rule and provide a standard basis for subsequent permission determining.

In an implementation, the pin access permission determining module 103 is configured to determine, according to the access control rule, the access permission of the target operating system corresponding to the hardware access request for the target pin. This module establishes a matching relationship between the access request received by the hardware access request receiving module 101 and the access control rule obtained by the access control rule obtaining module 102, and completes, through information comparison between the access request and the access control rule, precise determining of the permission of the target operating system to access the target pin, being a core module for achieving hardware access permission management and control.

According to the hardware access control system provided in the present disclosure, through hierarchical cooperation of the hardware access request receiving module 101, the access control rule obtaining module 102, and the pin access permission determining module 103,the hardware access requests of the plurality of operating systems on the same chip are received, the access control rule is retrieved, and the pin access permission is determined. In this way, an access management and control system for hardware resources of the pin is constructed at a software level, thereby implementing pin-level fine-grained hardware isolation, and reducing chip design and manufacturing costs. Meanwhile, through unified management and control for hardware access of the plurality of operating systems, problems such as accidental access and unauthorized operations between the operating systems are effectively avoided, thereby significantly improving operational security and stability of the plurality of operating systems.

### Exemplary method

FIG. 2 is a schematic flowchart of a hardware access control method according to an exemplary embodiment of the present disclosure. This embodiment may be applied to an electronic device. As shown in FIG. 2, the method includes the following steps.

Step S100: Receiving at least one hardware access request sent by at least one target operating system on a same chip.

The same chip may refer to an integrated circuit chip that integrates a plurality of hardware function modules and supports parallel operation of a plurality of independent operating systems. The integrated circuit chip is applied in a plurality of application fields. For example, in the field of automotive electronics, the chip may be a cockpit-driving integrated system on chip (SoC), within which a plurality of operating systems are simultaneously run through virtualization or hardware partitioning. In this case, the operating systems include, but are not limited to, an in-vehicle infotainment system, an advanced driver assistance system, and a cluster system. For another example, in the field of medical devices, the chip may be a high-performance ARM SoC, and the operating systems include, but are not limited to, a real-time control and acquisition system (such as controlling radiation and a mechanical arm) and an image processing and display system. For still another example, in the field of aerospace, the chip may be a high-reliability SoC based on PowerPC or ARM, and the operating systems include, but are not limited to, a mission processing system (such as cockpit display or flight control) and a passenger entertainment system.

The target operating system is one or more operating systems running on the same chip that actively initiate a hardware access operation. The hardware access request is used to request a target pin that the target operating system needs to access. The hardware access request may include a pin identifier of the target pin for identifying the target pin, and the pin identifier may be a pin ID or a pin address.

The target pin is a physical pin of the chip that is specified in the hardware access request and the target operating system intends to access, is an interface for electrical connection between the chip and external hardware, and may be any type of pin such as a general-purpose input/output (GPIO) pin or a dedicated function pin.

In an implementation, one hardware access request may be an access request for one pin or for a plurality of pins. In this embodiment, one hardware access request is an access request for one pin.

In an implementation, one or more hardware access requests sent by one target operating system may be received, and one or more hardware access requests respectively sent by a plurality of target operating systems may also be received.

By adopting the technical solution of this step, a unified hardware access request entry is established in an environment with a plurality of operating systems, so that access requirements of the target operating system for specific pins can be captured quickly, so as to provide precise request sources and access target information for subsequent permission verification, and lay foundation for fine-grained isolation.

Step S200: Obtaining a preset access control rule.

The access control rule is used to determine access permission of a plurality of operating systems on the same chip for a plurality of pins, and defines a policy set of access relationships between all operating systems on the chip and all pins. In addition, the access control rule may be flexibly set according to actual application scenarios, adapting to differentiated permission requirements of different operating systems for different pins.

Related hardware firewalls only rely on address space division to achieve isolation, without a unified permission rule system, and the rule cannot be flexibly adapted to complex scenarios with a plurality of operating systems and a plurality of pins. At the same time, lack of standardization in permission configuration results in blurred permission boundaries between different operating systems, easily leading to unauthorized access.

By adopting the technical solution of this step, a standardized and customizable permission determining basis is provided. By obtaining the preset access control rule, a core basis for determining legitimacy of the hardware access request is obtained, and access permission boundaries of the operating systems for the pins are clarified, thereby ensuring that a subsequent permission determining process is well-documented, precise, and efficient.

Step S300: Determining, according to the access control rule, access permission of the target operating system corresponding to the hardware access request for a target pin.

The access permission is a qualification defined in the access control rule for the operating system to perform an access operation on a corresponding chip pin, and may include allow or prohibited, and what type of operations are allowed. For example, an operating system A is allowed to configure a pin function of a pin a, and the operating system A is prohibited from writing data to hardware corresponding to a pin b.

In related technologies, hardware firewalls can only achieve address-segment-level permission management and control, and cannot achieve pin-level precise permission determining. By adopting the technical solution of this step, pin-level fine-grained permission determining is achieved, legitimate access is precisely distinguished from illegitimate access, and accidental access and unauthorized operations between a plurality of operating systems are effectively intercepted, so that system functional abnormalities and security risks are reduced. A permission determining process is standardized, thereby improving accuracy and reliability of a determining result and avoiding a system problem caused by permission misjudgment.

In an implementation, when it is determined that the access permission of the target operating system corresponding to the hardware access request for the target pin is allowed, the target operating system is allowed to access the target pin. Conversely, when it is determined that the access permission of the target operating system corresponding to the hardware access request for the target pin is prohibited, a message indicating an access failure is fed back to the target operating system.

According to the technical solutions of this embodiment of the present disclosure, secure and orderly access of the plurality of operating systems on the same chip to pin resources is achieved. The solutions do not require modification of a chip hardware design. Through rule setting and request management and control at a software level, including obtaining at least one hardware access request sent by at least one target operating system on the same chip, and determining, according to the preset access control rule, the access permission of the target operating system corresponding to the hardware access request for the target pin, pin-level fine-grained hardware isolation is achieved, and chip design and manufacturing costs are reduced. Meanwhile, through unified management and control for hardware access of a plurality of operating systems, problems such as accidental access and unauthorized operations between the operating systems are effectively avoided, thereby significantly improving operational security and stability of the plurality of operating systems.

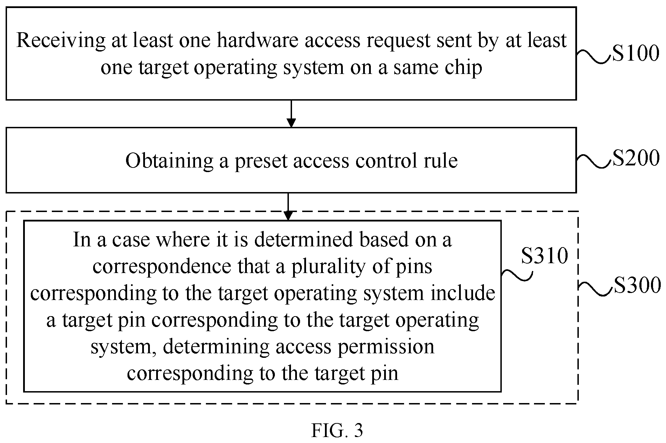

FIG. 3 is a schematic flowchart of another hardware access control method according to an exemplary embodiment of the present disclosure.

As shown in FIG. 3, in an implementation, the access control rule includes correspondences between the operating system, the pin, and the access permission for the pin.

In an implementation, a standardized access permission relationship between the operating system and the pin is pre-established. According to business requirements, the operating system, the pin, and the access permission for the pin are associated, so as to reduce complexity of permission configuration and maintenance. During subsequent determining, the access permission may be quickly and directly indexed through the operating system and the pin, thereby improving efficiency and accuracy of access permission determining.

For example, to more clearly illustrate the correspondences between the operating system, the pin, and the access permission for the pin, the following is presented in a form of a table. Certainly, Table 1 below is merely for convenience of explaining the correspondences, and does not limit a presentation form of the correspondences, which may be, for example, in a form of arrays or linked lists. A hardware instance refers to a specific individual or number within a same type of hardware, and is used to uniquely identify and distinguish between hardware.

**Table 1**

| Hardware Category | Hardware Instance | Access Permission of Operating System A | Access Permission of Operating System B |
|---|---|---|---|
| Pin | 1 | True | True |
| GPIO | 0 | False | True |
| GPIO | 1 | True | False |

Access permission of a plurality of operating systems for a plurality of pins may be clearly seen from table 1. For example, the access permission of the operating system A for the GPIO 1 is allowed (True), and the access permission of the operating system B for the GPIO 1 is prohibiting (False).

On the basis that the access control rule includes the correspondences between the operating system, the pin, and the access permission for the pin, step S300 of determining, according to the access control rule, access permission of the target operating system corresponding to the hardware access request for a target pin includes:
Step S310: In a case where it is determined based on the correspondence that a plurality of pins corresponding to the target operating system include the target pin corresponding to the target operating system, determining access permission corresponding to the target pin.

By adopting this implementation of this step, the plurality of pins corresponding to the target operating system are filtered out based on the preset correspondences between the operating system, the pin, and the access permission for the pin, and then it is determined whether the plurality of pins include the target pin that the target operating system intends to access this time. If it is determined that the plurality of pins corresponding to the target operating system include the target pin, dedicated access permission for this pin is extracted. Certainly, if the target pin is not among the plurality of pins corresponding to the target operating system, it may be determined that the target operating system has no access permission for the target pin.

According to the technical solutions of this embodiment of the present disclosure, the correspondences between three core elements in the access control rule, including the operating system, the pin, and the access permission for the pin are determined. Further, in permission determining, a pin set accessible by the target operating system may first be determined, and then it is determined whether the pin set includes the target pin, thereby achieving quick retrieval of the access permission of the target operating system for the target pin.

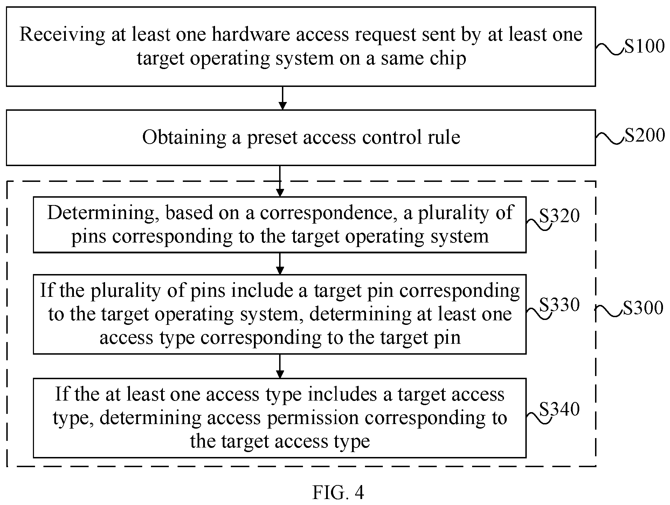

FIG. 4 is a schematic flowchart of still another hardware access control method according to an exemplary embodiment of the present disclosure.

As shown in FIG. 4, in an implementation, the hardware access request further carries a target access type and a target access parameter corresponding to the target pin. The access control rule includes correspondences between the operating system, the pin, an access type of the pin, and the access permission for the pin.

The access type refers to a specific operation type initiated by the operating system for the pin, and is a refined classification of an access behavior, including but not limited to modifying a pull-up/pull-down resistor of the pin, adjusting a driving capability, switching a pin function mode, reading data from hardware corresponding to the pin, writing data to the hardware corresponding to the pin, and outputting a high/low level through GPIO. The target access type refers to a specific operation type initiated by the target operating system for the target pin. The target access parameter may be specific configuration data or instruction parameter required to implement the target access type. For example, when the access type of adjusting a pin driving capability is performed, the target access parameter may be "a drive current of 20 mA". For another example, when the access type of outputting a level is performed, the target access parameter may be "high level of 3.3V". The target access parameter is data support for completing the hardware access operation. Certainly, in some cases, the target access parameter may be empty. For example, when the target access type is to output a high level, the target access parameter is empty, provided that a high level within a range required by a circuit may be output according to a situation of the circuit in which the target pin is located.

In this implementation, mapping relationships between the operating system, the pin, the access type, and the access permission are clarified in the access control rule. In other words, it is clarified whether a certain operating system has permission for allowed access when initiating a specific access type for a certain specific pin.

In an example, the correspondences between the operating system, the pin, the access type of the pin, and the access permission for the pin are presented through Table 2.

**Table 2**

| Hardware Category | Hardware Instance | Access Permission of Operating System A | Access Permission of Operating System B |
|---|---|---|---|
| Pin | 1 | [read:True],[write:False] | [read:False],[write:True] |
| GPIO | 0 | [read:True],[write:False] | [read:True],[write:True] |
| GPIO | 1 | [read:True],[write:True] | [read:False],[write:True] |

Access permission of a plurality of operating systems for a plurality of pins under different access types may be clearly seen from table 2. For example, for Pin 1, the operating system A is allowed to read data from hardware corresponding to Pin 1 and is prohibited from writing data to the hardware, while the operating system B is prohibited from reading data from the hardware corresponding to Pin 1 and is allowed to write data to the hardware. Similarly, table 2 in this embodiment of the present disclosure is merely for explaining the correspondences, without limiting presentation forms of the correspondences.

In an implementation, on a premise that the access control rule includes the correspondences between the operating system, the pin, the access type of the pin, and the access permission for the pin, Step S300 may include the following steps.

Step S320: Determining, based on the correspondence, the plurality of pins corresponding to the target operating system.

In this implementation, a pin set associated with the target operating system is quickly determined based on the correspondence, so as to determine whether the target pin that the target operating system intends to access is in the pin set.

If the target pin is not in the pin set associated with the target operating system, a message indicating an access failure may be sent to the operating system.

Step S330: If the plurality of pins include the target pin corresponding to the target operating system, determining at least one access type corresponding to the target pin.

The at least one access type corresponding to the target pin may refer to a set of all access types associated with a combination of the target operating system and the target pin. For example, access types associated with a combination of "ADAS-camera pin" may include reading a pin level, configuring a pin driving capability, and enabling a pin interrupt. This set may represent a range of operation types that can be initiated for the pin by the target operating system.

In this step, if the plurality of pins corresponding to the target operating system include the target pin to which the target operating system initiates an access this time, the at least one access type corresponding to the target pin, that is, an access type set corresponding to the target pin, may be determined, so as to facilitate subsequent determining of a relationship between the target access type and the access type set.

Step S340: If the at least one access type includes the target access type, determining access permission corresponding to the target access type.

In this step, the at least one access type corresponding to the target pin that is determined in step S330 is compared with the target access type. The target access permission corresponding to the target access type may be determined in a case where it is determined that the at least one access type includes the target access type. Through such precise matching, it is ensured that any access to the hardware strictly follows a preset fine-grained security policy, thereby maximumly improving security of the system and controllability of resources.

In an implementation, when it is determined that the access permission of the target access type is allowed, a next actual hardware operation may be performed. When it is determined that the access permission of the target access type is prohibiting, a hardware access process is terminated.

According to the technical solutions of this embodiment of the present disclosure, a four-dimensional access control rule including operating systems, pins, operation types, and access permission is pre-established, so as to achieve operation-type-level (that is, the access type) fine-grained isolation of pins, providing a flexible permission configuration foundation for a complex resource sharing scenario. The solutions are adapted to actual application scenarios where a same pin is shared by a plurality of operating systems and the plurality of operating systems have different operation permission, and dual permission boundaries are established at levels of pin range and access type, thereby avoiding unauthorized hardware access between the plurality of operating systems and ensuring security of hardware operations of the plurality of operating systems.

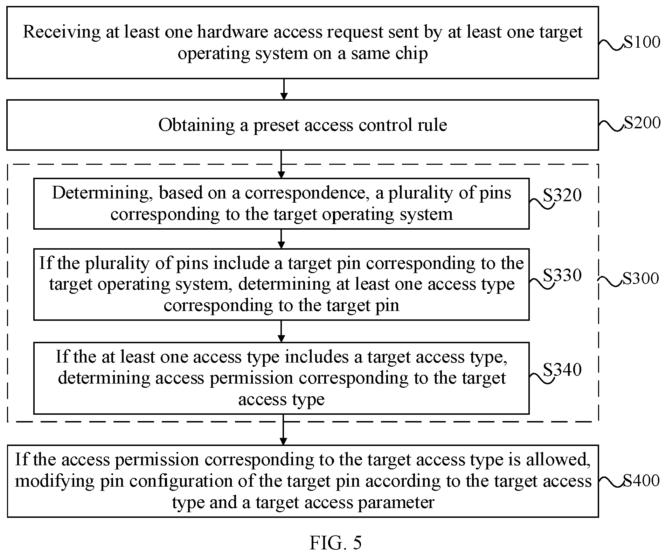

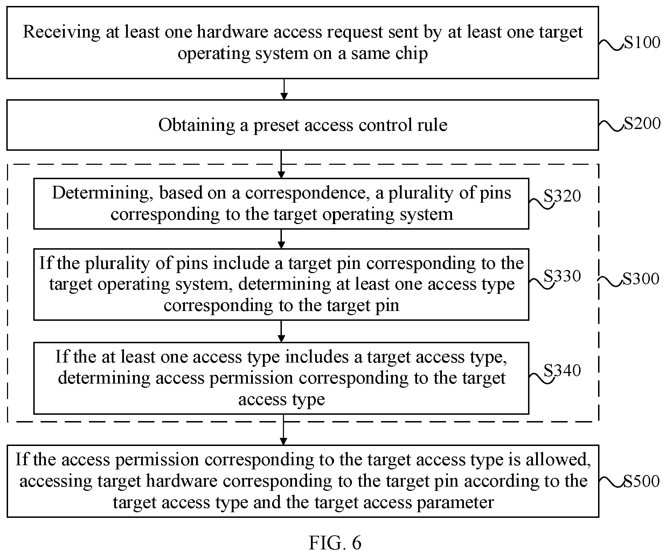

FIG. 5 is a schematic flowchart of yet another hardware access control method according to an exemplary embodiment of the present disclosure. FIG. 6 is a schematic flowchart of still yet another hardware access control method according to an exemplary embodiment of the present disclosure.

In the exemplary embodiments, in a case where the target access type is determined in the foregoing embodiments, for different target access types, in a case where it is clarified that the access permission corresponding to the target access types is allowed, a corresponding hardware operation, such as configuring a pin or accessing the hardware, is performed according to the target access type and the target access parameter carried in the hardware access request.

In an implementation, after the corresponding hardware operation is performed, a message indicating successful access corresponding to the hardware access request is fed back to the operating system.

In an implementation, as shown in FIG. 5, in a case where the target access type is any one of pin configuration categories, after step S340 of if the at least one access type includes the target access type, determining access permission corresponding to the target access type, the method further includes:
Step S400: If the access permission corresponding to the target access type is allowed, modifying pin configuration of the target pin according to the target access type and the target access parameter.

The pin configuration categories include, but are not limited to, modifying a multiplex function of the pin (for example, configuring the pin from a GPIO mode to an I2C SCL pin), setting a pull-up/pull-down resistor (such as pull-up, pull-down, or floating), adjusting a driving capability (such as magnitude of a drive current), setting a rate, configuring open-drain/push-pull output, and other operation types (that is, access types).

By adopting this implementation, in a case where the target access type is any one of the pin configuration categories and the access permission of the target access type is allowed, the pin configuration of the target pin may be modified according to the target access type and the target access parameter, to achieve access to the pin.

In an implementation, as shown in FIG. 6, in a case where the target access type is any one of data access categories of target hardware, and the target hardware corresponds to the target pin, after step S340 of if the at least one access type includes the target access type, determining access permission corresponding to the target access type, the method further includes:
Step S500: If the access permission corresponding to the target access type is allowed, accessing the target hardware corresponding to the target pin according to the target access type and the target access parameter.

The data access categories include reading data through the pin, transmitting high/low levels/control data to an external device, performing data interaction with the external device, and other operation types.

The target hardware refers to an external/internal hardware device of a chip that has a physical connection with the target pin and performs data transmission through the target pin, such as a GPS sensor, a camera, an instrument display screen, etc.

According to the technical solutions of the embodiments of the present disclosure, an association between permission verification and hardware data interaction is established, corresponding pin operations are performed for different access types, and for the case where the target access type is one of the pin configuration categories, the pin configuration of the target pin is modified according to the target access parameter carried in the hardware access request, so as to achieve configuration modification of the target pin. For a case where the target access type is one of the data access categories, the target hardware corresponding to the target pin is accessed according to the target access parameter carried in the hardware access request.

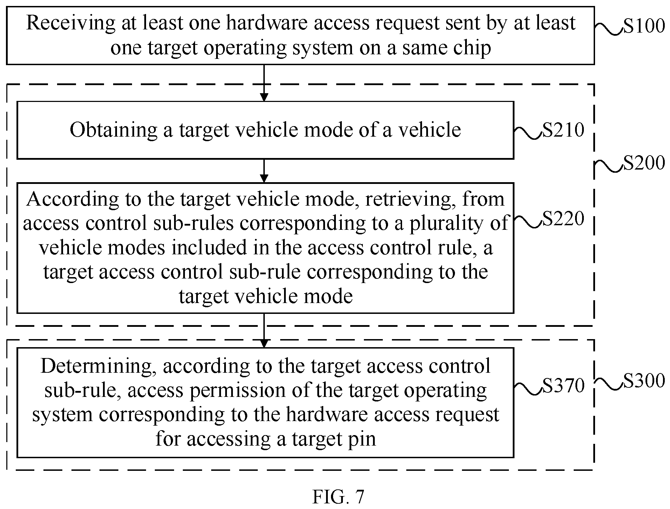

FIG. 7 is a schematic flowchart of a method for obtaining an access control rule according to an exemplary embodiment of the present disclosure.

As shown in FIG. 7, in an implementation, the chip is a system on chip of a vehicle.

The system on chip of the vehicle is a SoC chip applied in the field of intelligent vehicles.

Step S200 of obtaining a preset access control rule includes:
Step S210: Obtaining a target vehicle mode of the vehicle.

The vehicle mode refers to a current operating state of the vehicle, such as a driving mode, a parking mode, an auto-parking mode, a charging mode, or a diagnostic mode. Hardware usage requirements of the operating systems of the vehicle differ in different vehicle modes. For example, in the driving mode, an intelligent driving system controls a pin corresponding to the camera. In the parking mode, an entertainment system controls a pin corresponding to the camera. The target vehicle mode is an operating mode in which the vehicle is actually in at a current moment.

By adopting the implementation of this step, an actual operating state of the current vehicle is obtained, providing a decision basis for subsequent selection of the access control rule.

Step S220: According to the target vehicle mode, retrieving, from access control sub-rules corresponding to a plurality of vehicle modes included in the access control rule, a target access control sub-rule corresponding to the target vehicle mode.

The access control sub-rule is a component unit of the overall access control rule, and is used to determine the access permission of at least one operating system for a plurality of pins in the corresponding vehicle mode, adapting to hardware usage requirements in this vehicle mode. The access control sub-rule is a complete permission configuration pre-defined for a specific vehicle mode. For example, the access control sub-rule in the driving mode specifies that: during driving, the ADAS system is allowed to perform access, pin configuration modification, and other operations on hardware corresponding to camera pins and radar pins, and the IVI system is allowed to access pins related to an entertainment device. The access control sub-rule in the parking mode specifies that: the IVI system is allowed to perform operations such as modifying the configuration of camera pins.

By adopting the implementation of this step, after the target vehicle mode is determined, the target access control sub-rule corresponding to the target vehicle mode is selected from a plurality of pre-stored access permission sub-rules, for use in subsequent permission determining.

In a case where the target vehicle mode of the vehicle is obtained, step S300 of determining, according to the access control rule, access permission of the target operating system corresponding to the hardware access request for a target pin includes:
Step S370: Determining, according to the target access control sub-rule, access permission of the target operating system corresponding to the hardware access request for accessing the target pin.

A same operating system and a same hardware pin may obtain completely different determining results in different vehicle modes. For example, an access request of the IVI system for the camera pin may be rejected in the driving mode but be allowed in the parking mode.

By adopting the implementation of this step, the currently obtained target access control sub-rule is used to perform permission checking and determining on the received hardware access request, to determine whether the target operating system has access permission for the target pin in the current vehicle mode, thereby avoiding contention and potential conflicts of pin resources in different vehicle modes.

According to the technical solutions of this embodiment of the present disclosure, the access control rule is associated with the vehicle mode, and an independent permission configuration is defined for each vehicle mode. Thus, during operation of the vehicle, the access control rule is dynamically switched to a corresponding access control sub-rule according to a current target vehicle mode, so that permission management and control matches an actual state of the vehicle.

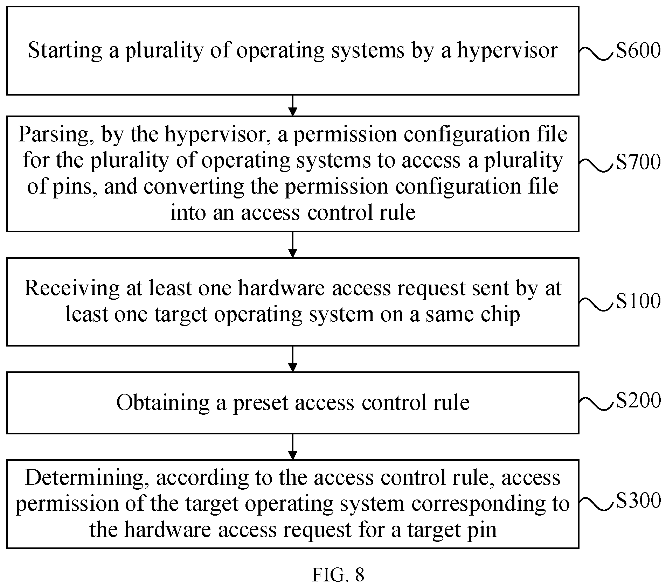

FIG. 8 is a schematic flowchart of another method for obtaining an access control rule according to an exemplary embodiment of the present disclosure.

As shown in FIG. 8, in an implementation, in a case where an isolation mode of hardware resources is virtualization isolation, before step S100 of receiving at least one hardware access request sent by at least one target operating system on a same chip, the method further includes the following steps.

Step S600: Starting a plurality of operating systems by a hypervisor.

The hypervisor, also referred to as a virtual machine manager, is a core component of a virtualization isolation architecture; is located between physical hardware and a plurality of operating systems; is responsible for starting the operating systems, virtualizing and partitioning the hardware resources, and other functions; and may directly access the physical hardware and allocate virtual hardware resources to the operating systems.

By adopting the implementation of this step, by the hypervisor, a virtualization environment is created and the operating systems are started, thereby facilitating subsequent obtaining of the access control rule.

Step S700: Parsing, by the hypervisor, a permission configuration file for the plurality of operating systems to access the plurality of pins, and converting the permission configuration file into the access control rule.

The permission configuration file is a file that is pre-written according to business requirements and defines the access permission of each operating system for each pin, and is a static file describing the access permission of each operating system for each pin.

In an implementation, the permission configuration file may be stored in a non-volatile memory (such as a flash) through an independent image. The permission configuration file is obtained by the hypervisor by reading the image, and an access control rule corresponding to the permission configuration file is constructed in memory. To be specific, a format of the permission configuration file is converted to obtain the access control rule, so that the access control rule can be read when the hardware access request is received.

By adopting the implementation of this step, conversion from the permission configuration file to the access control rule is completed during a startup phase, thereby providing an adjudication basis for processing the hardware access request sent from the operating system.

According to the technical solutions of this embodiment of the present disclosure, orderly startup of the operating systems is achieved by a hypervisor, and access control rules are uniformly constructed, thereby ensuring uniqueness and consistency of determining bases for the access permission of the plurality of operating systems, and avoiding misjudgment caused by rule conflicts.

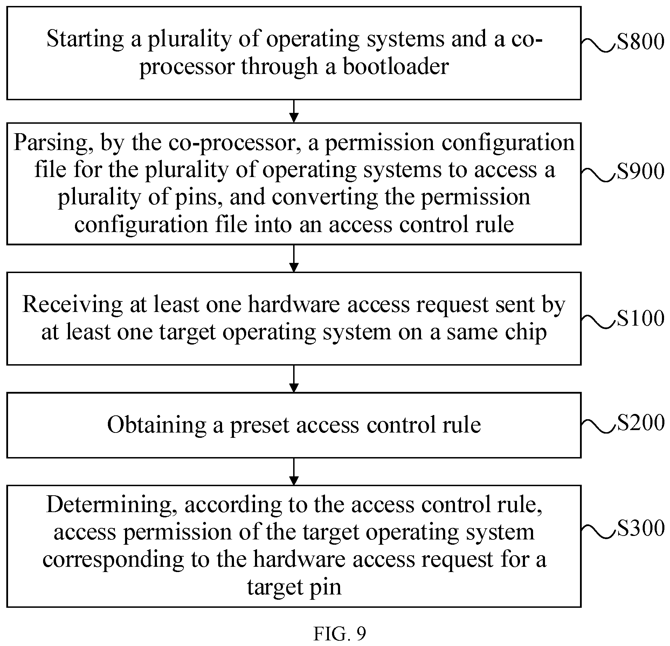

FIG. 9 is a flowchart of a further hardware access control method according to an exemplary embodiment of the present disclosure.

As shown in FIG. 9, in an implementation, in a case where the isolation mode of the hardware resources is hardware isolation, before step S100 of receiving at least one hardware access request sent by at least one target operating system on a same chip, the method further includes the following steps.

Step S800: Starting a plurality of operating systems and a co-processor through a bootloader.

The hardware isolation, also referred to as hard partitioning, involves a plurality of operating systems running on a physical CPU core, with each CPU core running an independent operating system. Isolation of the hardware resources typically relies on inherent characteristics of hardware (such as physical separation of CPU cores, configuration of a memory management unit (MMU), and assistance of the co-processor). The bootloader is responsible for completing chip hardware initialization and loading, and starting subsequent operating systems and core processors after the chip is powered on.

In this step, under a system architecture of hardware isolation, chip hardware initialization, program image loading, and system startup guidance are achieved through the bootloader.

Step S900: Parsing, by the co-processor, a permission configuration file for the plurality of operating systems to access the plurality of pins, and converting the permission configuration file into the access control rule.

The co-processor is an auxiliary processor dedicated to system control and management tasks; may be a system control processor (SCP); has characteristics of high real-time performance and low resource usage; and serves as a dedicated hardware management entity in a hardware isolation scenario, to be responsible for hardware permission management, hardware operation execution, and other management and control work. It should be understood that the conversion between the permission configuration file and the access control rule in this embodiment of the present disclosure is same as that in the foregoing embodiment, that is, the format conversion.

By adopting the implementation of this step, the access control rules uniformly constructed by the co-processor ensure uniqueness and consistency of determining bases for permission of a plurality of systems, thereby avoiding misjudgment caused by rule conflicts.

According to the technical solutions of this embodiment of the present disclosure, for a deployment scenario where hardware isolation is adopted for the hardware resources, pre-flows of system startup and access control rule construction before the hardware access request is received are clarified. In this solution, unified parsing and format conversion of the permission configuration file are performed by a dedicated management and control entity (the co-processor) in the hardware isolation scenario, thereby ensuring uniqueness of a rule construction entity for the hardware access permission of the plurality of operating systems and uniformity of rule versions.

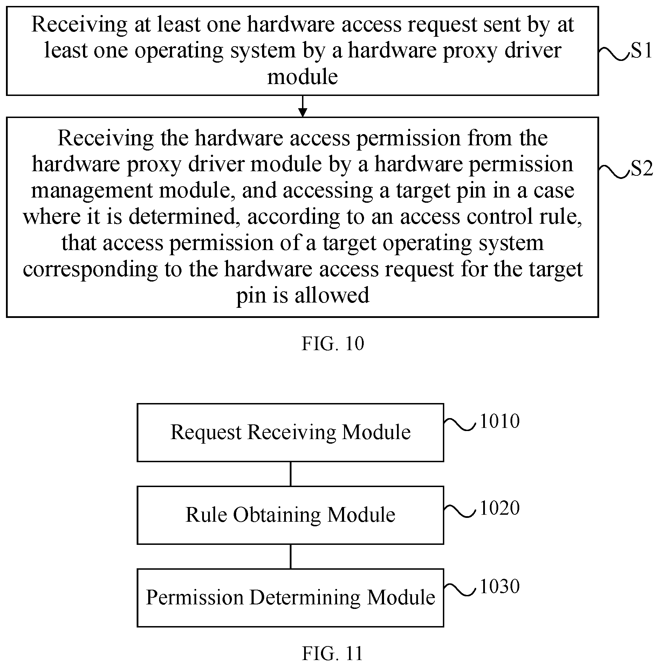

FIG. 10 is a flowchart of a still further hardware access control method according to an exemplary embodiment of the present disclosure.

As shown in FIG. 10, in an implementation, based on the foregoing embodiments, a hardware access control method is provided. Technical terms that are same as or similar to those in the foregoing embodiments will not be repeated. The hardware access control method includes the following steps.

Step S1: Receiving at least one hardware access request sent by at least one operating system by a hardware proxy driver module.

The hardware proxy driver module provides a standard driver interface for operating systems, such as read/write/ioctl interfaces on a Linux system, and communicates with a hardware permission management module to request an actual hardware operation. The hardware proxy driver module converts the hardware access request into a standardized communication protocol for subsequent determining of the access permission of the target operating system corresponding to the hardware access request for the target pin. For example, the hardware proxy driver module receives the hardware access request sent from the operating system, converts the hardware access request into a binary protocol, and sends the binary protocol to the hardware permission management module.

Step S2: Receiving the hardware access request from the hardware proxy driver module by a hardware permission management module, and accessing the target pin in a case where it is determined, according to the access control rule, that the access permission of the target operating system corresponding to the hardware access request for the target pin is allowed.

The hardware permission management module is configured to manage permission for hardware (such as pins) shared by different operating systems.

In an implementation, in a case where the isolation mode of the hardware resources is virtualization isolation, the hardware permission management module may be deployed in the hypervisor.

In an implementation, in a case where the isolation mode of the hardware resources is hardware isolation, the hardware permission management module may be deployed in the co-processor.

By adopting the implementation of this step, after receiving the hardware access request, the hardware permission management module queries the access control rule to determine whether the access permission of the target operating system corresponding to the hardware access request for the target pin is allowed. Access to the target pin is performed in a case where it is determined that the access permission of the target operating system for the target pin is allowed.

Certainly, regarding the target access type and the target access parameter carried in the hardware access request, the access control rule includes the correspondences between the operating system, the pin, the access type of the pin, and the access permission for the pin. Correspondingly, for specific determining of the access permission of the target operating system for the target pin, and related flows of operations on the target pin, reference may be made to the embodiments corresponding to FIG. 3 to FIG. 7, and details are not described herein.

During a development stage of the operating systems, the pin configuration and the access permission of the operating systems for the pins is written into respective configuration files (such as Linux DTS). During the startup stage, the operating systems respectively configure respective pin functions. Due to independence of the operating systems and a possibility that the plurality of operating systems may use the same pin simultaneously in a configuration process or a subsequent upgrade process, in the embodiments of the present disclosure, the hardware access requests sent from the plurality of operating systems may be received by the permission management module, and the target operating system that can access that pin may be determined according to the access control rule, so as to improve safe and stable operation of the operating systems on the entire chip.

In an implementation, in a case where the hardware access is successful, a message indicating access success is fed back to the operating system by the hardware proxy driver module.

In an implementation, in a case where the hardware access is failed (for example, the access permission is prohibited or an access error occurs), a message indicating an access failure is fed back to the operating system by the hardware proxy driver module.

According to the technical solutions of the embodiments of the present disclosure, messages are transmitted between the operating system and the hardware permission management module by the hardware proxy driver module. The hardware permission management module may determine the access permission for the target pin for the hardware access request sent from the target operating system. In a case where it is determined, according to the access control rule, that the access permission of the target operating system for the target pin is allowed, the configuration of the target pin or the access to the target hardware corresponding to the target pin is achieved, thereby achieving pin-level fine-grained hardware isolation and reducing chip design and manufacturing costs.

The solutions involved in the present disclosure are not limited to the embodiments described above.

### Exemplary apparatus

The hardware access control method provided in the embodiments of the present disclosure is described above. It may be understood that, to implement various functions of the hardware access control method, a hardware access control apparatus may include corresponding hardware and software for implementing hardware functions.

A person skilled in the art should readily conceive that, in combination with the steps of the hardware access control method described in the embodiments of the present disclosure, the embodiments of the present disclosure can be implemented in a form of hardware or a combination of software-driven hardware. Whether a certain function is implemented in a form of hardware or software-driven hardware depends on specific application and design constraints of the technical solutions. A person skilled in the art may use different methods to implement the described functions for each specific application, but such implementation should not be considered beyond the scope of the present disclosure.

For beneficial technical effects corresponding to exemplary embodiments of this apparatus, reference may be made to corresponding beneficial technical effects in the foregoing exemplary method section, and details are not described herein.

FIG. 11 is a schematic diagram of a structure of a hardware access control apparatus according to an exemplary embodiment of the present disclosure.

As shown in FIG. 11, in an embodiment, a hardware access control apparatus 1000 includes:
a request receiving module 1010, configured to receive at least one hardware access request sent by at least one target operating system on a same chip, where the hardware access request is used to request a target pin that the target operating system needs to access;
a rule obtaining module 1020, configured to obtain a preset access control rule, where the access control rule is used to determine access permission of a plurality of operating systems on the same chip for a plurality of pins; and
a permission determining module 1030, configured to determine, according to the access control rule, the access permission of the target operating system corresponding to the hardware access request for the target pin.

According to the technical solutions of the embodiments of the present disclosure, secure and orderly access of the plurality of operating systems on the same chip to pin resources is achieved. Specifically, the solutions do not require modification of a chip hardware design. Through rule setting and request management and control at a software level, including obtaining at least one hardware access request sent by at least one target operating system on the same chip, and determining, according to the preset access control rule, the access permission of the target operating system corresponding to the hardware access request for the target pin, pin-level fine-grained hardware isolation is achieved, and chip design and manufacturing costs are reduced. Meanwhile, through unified management and control for hardware access of a plurality of operating systems, problems such as accidental access and unauthorized operations between the operating systems are effectively avoided, thereby significantly improving operational security and stability of the plurality of operating systems.

In an implementation, the access control rule includes correspondences between the operating system, the pin, and the access permission for the pin.

The permission determining module 1030 is configured to determine, in a case where it is determined based on the correspondence that a plurality of pins corresponding to the target operating system include the target pin corresponding to the target operating system, access permission corresponding to the target pin.

In an implementation, the hardware access request further carries a target access type and a target access parameter corresponding to the target pin. The access control rule includes correspondences between the operating system, the pin, an access type of the pin, and the access permission for the pin.

The permission determining module 1030 is configured to: determine, based on the correspondence, the plurality of pins corresponding to the target operating system;
if the plurality of pins include the target pin corresponding to the target operating system, determine at least one access type corresponding to the target pin; and
if the at least one access type includes the target access type, determine access permission corresponding to the target access type.

In an implementation, the target access type is any one of pin configuration categories; and the apparatus further includes:
a configuration modification module, configured to, if the access permission corresponding to the target access type is allowed, modify pin configuration of the target pin according to the target access type and the target access parameter.

In an implementation, the target access type is any one of data access categories of target hardware corresponding to the target pin, and the apparatus further includes:
a target hardware access module, configured to, if the access permission corresponding to the target access type is allowed, access the target hardware corresponding to the target pin according to the target access type and the target access parameter.

In an implementation, the chip is a system on chip of a vehicle; and the rule obtaining module 1020 is configured to: obtain a target vehicle mode of the vehicle; and
according to the target vehicle mode, retrieve, from access control sub-rules corresponding to a plurality of vehicle modes included in the access control rule, a target access control sub-rule corresponding to the target vehicle mode, where the access control sub-rule is used to determine access permission of at least one operating system for a plurality of pins in a corresponding vehicle mode.

The permission determining module 1030 is configured to determine, according to the target access control sub-rule, access permission of the target operating system corresponding to the hardware access request for accessing the target pin.

In an implementation, the apparatus further includes:
a first rule conversion module, configured to: start a plurality of operating systems by a hypervisor; and
parse, by the hypervisor, a permission configuration file for the plurality of operating systems to access the plurality of pins, and convert the permission configuration file into the access control rule.

In an implementation, the apparatus further includes:
a second rule conversion module, configured to: start a plurality of operating systems and a co-processor through a bootloader; and
parse, by the co-processor, a permission configuration file for the plurality of operating systems to access the plurality of pins, and convert the permission configuration file into the access control rule.

### Exemplary electronic device

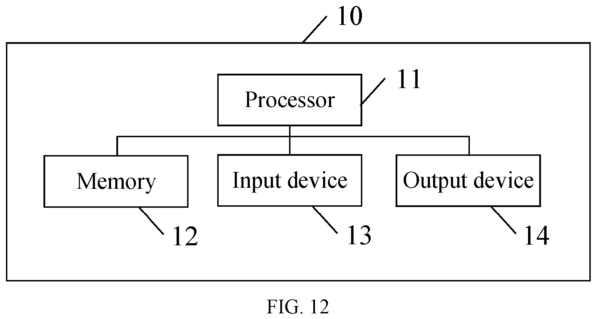

FIG. 12 is a diagram of a structure of an electronic device according to an exemplary embodiment of the present disclosure. The electronic device includes at least one processor 11 and a memory 12.

The processor 11 may be a central processing unit (CPU) or another form of processing unit having a data processing capability and/or an instruction execution capability, and may control another component in the electronic device 10 to implement a desired function.

The memory 12 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 11 may run the one or more program instructions to implement the hardware access control method according to the foregoing embodiments of the present disclosure and/or other desired functions.

In an example, the electronic device 10 may further include an input device 13 and an output device 14. These components are interconnected through a bus system and/or other forms of connection mechanisms (not shown).

The input device 13 may further include, for example, a keyboard or a mouse, etc.

The output device 14 may output various information to the outside, and may include, for example, a display, a speaker, a printer, a communication network, and a remote output device connected to the communication network.

Certainly, for simplicity, FIG. 12 shows only some of components in the electronic device 10 that are related to the present disclosure, and components such as a bus and an input/output interface are omitted. In addition, according to specific applications, the electronic device 10 may also include any other appropriate components.

### Exemplary computer program product and computer readable storage medium

In addition to the foregoing methods and devices, embodiments of the present disclosure may also provide a computer program product including computer program instructions that, when run by a processor, cause the processor to perform the steps, of the hardware access control method according to the embodiments of the present disclosure, that are described in the "Exemplary method" section described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the hardware access control method according to the embodiments of the present disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples rather than limitations, and it cannot be considered that these advantages, superiorities, and effects are necessary for the embodiments of the present disclosure. In addition, specific details described above are merely for examples and for ease of understanding, rather than limitations. The details described above do not limit that the present disclosure must be implemented by using the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A hardware access control method, comprising:
receiving (S100) at least one hardware access request sent by at least one target operating system on a same chip, wherein the hardware access request is used to request a target pin that the target operating system needs to access;
obtaining (S200) a preset access control rule, wherein the access control rule is used to determine access permission of a plurality of operating systems on the same chip for a plurality of pins; and
determining (S300), according to the access control rule, an access permission of the target operating system corresponding to the hardware access request for the target pin.

2. The hardware access control method according to claim 1, wherein the access control rule comprises correspondences between the operating system, the pin, and the access permission for the pin; and
the determining (S300), according to the access control rule, the access permission of a target operating system corresponding to the hardware access request for the target pin comprises:
in a case where it is determined, based on the correspondence, that a plurality of pins corresponding to the target operating system comprise the target pin corresponding to the target operating system, determining (S310) access permission corresponding to the target pin.

3. The hardware access control method according to claim 2, wherein the hardware access request further carries a target access type and a target access parameter corresponding to the target pin, and the access control rule comprises correspondences between the operating system, the pin, an access type of the pin, and the access permission for the pin; and
the in a case where it is determined, based on the correspondence, that a plurality of pins corresponding to the target operating system comprise the target pin corresponding to the target operating system, determining (S310) access permission corresponding to the target pin comprises:
determining (S320), based on the correspondence, the plurality of pins corresponding to the target operating system;
if the plurality of pins comprise the target pin corresponding to the target operating system, determining (S330) at least one access type corresponding to the target pin; and
if the at least one access type comprises the target access type, determining (S340) access permission corresponding to the target access type.

4. The hardware access control method according to claim 3, wherein the target access type is any one of pin configuration categories;
and after the if at least one access type comprises the target access type, determining (S340) access permission corresponding to the target access type, the method further comprises:
if the access permission corresponding to the target access type is allowed, modifying (S400) pin configuration of the target pin according to the target access type and the target access parameter.

5. The hardware access control method according to claim 3, wherein the target access type is any one of data access categories of target hardware, and the target hardware corresponds to the target pin; and
after the if at least one access type comprises the target access type, determining (S340) access permission corresponding to the target access type, the method further comprises:
if the access permission corresponding to the target access type is allowed, accessing (S500) the target hardware corresponding to the target pin according to the target access type and the target access parameter.

6. The hardware access control method according to claim 1, wherein the chip is a system on chip of a vehicle;
the obtaining (S200) a preset access control rule comprises:
obtaining (S210) a target vehicle mode of the vehicle;
according to the target vehicle mode, retrieving (S220), from access control sub-rule corresponding to a plurality of vehicle modes included in the access control rule, a target access control sub-rule corresponding to the target vehicle mode, wherein the access control sub-rule is used to determine access permission of at least one operating system for a plurality of pins in a corresponding vehicle mode; and
the determining (S300), according to the access control rule, the access permission of a target operating system corresponding to the hardware access request for a target pin comprises:
determining (S370), according to the target access control sub-rule, access permission of the target operating system corresponding to the hardware access request for accessing the target pin.

7. The hardware access control method according to claim 1, wherein in a case where an isolation mode of hardware resources is virtualization isolation, before the receiving (S100) at least one hardware access request sent by at least one target operating system on a same chip, the method further comprises:
starting (S600) a plurality of operating systems by a hypervisor; and
parsing (S700), by the hypervisor, a permission configuration file for the plurality of operating systems to access the plurality of pins, and converting the permission configuration file into the access control rule.

8. The hardware access control method according to claim 1, wherein in a case where an isolation mode of hardware resources is hardware isolation, before the receiving (S100) at least one hardware access request sent by at least one target operating system on a same chip, the method further comprises:
starting (S800) a plurality of operating systems and a co-processor through a bootloader; and
parsing (S900), by the co-processor, a permission configuration file for the plurality of operating systems to access the plurality of pins, and converting the permission configuration file into the access control rule.

9. A hardware access control apparatus, comprising:
a request receiving module (1010), configured to receive at least one hardware access request sent by at least one target operating system on a same chip, wherein the hardware access request is used to request a target pin that the target operating system needs to access;
a rule obtaining module (1020), configured to obtain a preset access control rule, wherein the access control rule is used to determine access permission of a plurality of operating systems on the same chip for a plurality of pins; and
a permission determining module (1030), configured to determine, according to the access control rule, the access permission of the target operating system corresponding to the hardware access request for the target pin.

10. The hardware access control apparatus according to claim 9, wherein the access control rule comprises correspondences between the operating system, the pin, and the access permission for the pin, and the permission determining module (1030) is configured to determine, in a case where it is determined based on the correspondence that a plurality of pins corresponding to the target operating system include the target pin corresponding to the target operating system, access permission corresponding to the target pin.

11. The hardware access control apparatus according to claim 10, wherein the hardware access request further carries a target access type and a target access parameter corresponding to the target pin, and the access control rule comprises correspondences between the operating system, the pin, an access type of the pin, and the access permission for the pin, and the permission determining module (1030) is configured to:
determine, based on the correspondence, the plurality of pins corresponding to the target operating system;
if the plurality of pins include the target pin corresponding to the target operating system, determine at least one access type corresponding to the target pin; and
if the at least one access type includes the target access type, determine access permission corresponding to the target access type.

12. The hardware access control apparatus according to claim 11, wherein the target access type is any one of pin configuration categories, and the apparatus further comprises:
a configuration modification module, configured to, if the access permission corresponding to the target access type is allowed, modify pin configuration of the target pin according to the target access type and the target access parameter.

13. The hardware access control apparatus according to claim 11, wherein the target access type is any one of data access categories of target hardware corresponding to the target pin, and the apparatus further comprises:
a target hardware access module, configured to, if the access permission corresponding to the target access type is allowed, access the target hardware corresponding to the target pin according to the target access type and the target access parameter.

14. A computer readable storage medium, on which a computer program is stored, wherein the computer program, when executed by a processor, causes the processor to implement the hardware access control method according to any one of claims 1 to 8.

15. An electronic device (10), wherein the electronic device comprises:
a processor; and
a memory for storing instructions executable by the processor, wherein
the processor is configured to read the executable instructions from the memory, and execute the instructions to implement the hardware access control method according to any one of claims 1 to 8.
